# EUROPEAN PATENT SPECIFICATION

(11) **EP 1 901 380 B1**
(45) Date of publication and mention of the grant of the patent: **20.08.2008**
(21) Application number: 06120362.6
(22) Date of filing: 08.09.2006
(51) Int. Cl.: H01M 8/04, H01M 8/10, H01M 8/06

(54) **A modular direct fuel cell system with integrating processing unit**
Modulares Direktmethanolbrennstoffzellensystem mit integrierter Aufbereitungseinheit
Système modulair de pile à combustible à méthanol direct avec unité de traitement intégrée

(43) Date of publication of application: 19.03.2008
(73) Proprietor: Samsung SDI Germany GmbH, 12459 Berlin (DE); Samsung SDI Co., Ltd., Suwon-si Gyeonggi-do (KR)
(72) Inventor: Bronold, Matthias, Dr., 12209, Berlin (DE); Larrain, Diego, Dr., 10999, Berlin (DE); Mergel, Stefan, 10437, Berlin (DE)
(74) Representative: Hengelhaupt, Jürgen

(56) References cited:
- EP-A1- 1 383 191
- EP-A2- 1 521 324
- WO-A-20/05122304

## Description

The invention relates to a modular direct fuel cell system with an integrating processing unit as stated in the terms of claim 1. In particular, the invention relates to a modular direct methanol fuel cell system (DMFC system) for portable applications.

A fuel cell is an electrochemical device producing electricity from an external fuel supply of hydrogen and oxygen. Typical reactants used in a fuel cell are hydrogen on an anode side and oxygen on a cathode side. Fuel cells are often considered to be very attractive in modern applications for their high efficiency and ideally emission-free use. In principle, the only by-product of a hydrogen fuel cell is water vapor. There are several different types of fuel cells, each using a different chemistry. Fuel cells are usually classified by the type of electrolyte they use. Some types of fuel cells work well for use in stationary power generation plants. Others may be useful for small portable applications or for powering cars.

A Direct Methanol Fuel Cell (DMFC) relies upon the oxidation of methanol on a catalyst layer to form carbon dioxide. Water is consumed at an anode and is produced at a cathode. Protons (H⁺) are transported across a proton exchange membrane to the cathode where they react with oxygen to produce water. Electrons are transported via an external circuit from anode to cathode providing power to external devices. DMFCs have the advantage that they do not require the use of a reformer to extract hydrogen from the fuel. This allows DMFC do be designed compact, e.g. for mobile telecommunication devices.

In detail, the DMFC is composed of an anode, a cathode and a electrolyte film sandwiched between the anode and the cathode. A methanol aqueous solution is employed as the fuel. A fuel supply is connected with the fuel cell to supply fuel to the anodes. An air supply supplies air to the cathodes. A heat exchanger is connected to the cathodes exhaust for cooling the exhaust stream and condensing water from the exhaust gas and discharging the water to be mixed with the fuel. The condensed water is re-circulated to the fuel supply unit and re-utilized. The fuel does not need to be diluted by water in advance, leading to a further reduction of the size of the fuel cell.

One indispensable function in the system is the separation of CO₂ from the outlet stream coming out of the stack fuel outlet. This outlet stream comprises of a mixture of methanol, water and CO₂. For a proper function of the fuel cell the CO₂ has to be separated from the fuel mixture stream prior to the recycling of the stream back into the stack. A DMFC system of this kind is described in US 6,110,613 and US 20040062964. The latter addresses the issue of condensing water in a heat exchanger of a DMFC system in order to separate it from the exhaust stream of the fuel cell and to re-circulate the water and mix it with the fuel.

An anode cycle for fuel mixture consisting of a CO₂/fuel separator mounted downstream from the stack fuel outlet removes CO2 from the reaction stream and vents it to the ambient through a venting opening. In a mixer the fuel mixture stream is mixed with concentrated fuel from a fuel tank. A fuel pump feeds the fuel mixture back to the fuel inlet of the stack.

A general characteristic of such a DMFC system is the high number of fluid connections between the different components. This fact poses big challenges for manufacturing. The assembly of the fluid connections is very laborious and - due to the complex geometries of the components - leads to automisation problems. In addition, it yields a high risk of quality problems due to leaks and the mix-up of connections.

There have been some approaches to solve these problems.

In WO 99/60644 a modular fuel cell system with a gas distributor module and fuel cell and gas tank modules is disclosed.

In EP1 429 407A1 a concept for production series is presented. A number of different modules (fuel cell, tank, heat exchanger) are connected with a base module. By using this concept fuel cell modules with different power and or energy ranges can be built up using the same set of components.

None of these concepts is able to solve the problem related to the high number of fluid connections between system components thus having inherent quality problems. In contrast, the number of fluid connections is increased with respect to conventional DMFC systems because of the modular set-up.

It is therefore an object of the present invention to propose a fuel cell system concept that considerably reduces the system complexity in terms of manufacturing issues.

According to the invention the object is achieved by integrating multiple system functions into one unit hereafter called Integrating Processing Unit. The large number of system components is reduced drastically, leading to a simple and easy to manufacture system with only a limited number of fluid connections between separate components.

This Integrating processing unit comprises the functions of condensing water from the stack cathode outlet stream, separating the air from the condensed water, separating the CO2 from the fuel mixture, mixing the condensed water with the fuel mixture and, optionally, to mix concentrated fuel into the fuel mixture.

In more sophisticated embodiments also pumps, fan and/or sensors can be integrated into the Integrating Processing Unit.

Accordingly, a modular DMFC fuell cell system is provided, comprising a housing having a bottom and a top, a pump, a fuel cell stack, a system control, and a fuel tank integrating into said housing, characterized by an integrating processing unit provided in said housing, which integrates a unit for condensing water, and a unit for separating gas streams from liquid streams, and a first fluid connection unit between said fuel cell stack and said integrating processing unit for leading outlet air and outlet fuel form stack into the integrating processing unit, a second fluid connection unit between said fuel cell stack and said integrating processing unit for leading a fuel mixture form the integrating processing unit back to stack, and a third fluid connection unit leading fuel form the tank to the integrating processing unit. The means for separating gas streams from liquid streams comprises means for separating a gas from a fuel and means for separating air from water having a second integrating fluid connection between each other.

The processing unit further comprises means for mechanically connecting said unit for condensing water and said unit for separating gas streams from liquid streams and a first integrating fluid connection between said unit for condensing water and said unit for separating gas streams from liquid streams, wherein said first integrating fluid connection is closed and sealed off by mechanically connecting said unit for condensing water and said unit for separating gas streams from liquid streams using said means for connecting.

The pump, fuel cell stack, integrating processing unit and said fuel tank are arranged horizontally next to each other on said bottom of the housing leading to a very efficient and compact design.

The system control is arranged behind said line on said bottom of said housing, the system control receiving input signal from sensors in the integrating processing unit and/or the stack and calculates output signals for controlling the system. The fuel cell stack and said fuel tank may be arranged on opposing sides of said integrating processing unit.

The first fluid connection unit may be realized as a first fluid connection and a second fluid connection being separated from each other.

The third fluid connection unit may be realized as a third fluid connection and a fourth fluid connection leading fuel from the tank via a fuel pump to the integrating processing unit.

A fuel pump and a circulation pump may be further integrating into the integrating processing unit, wherein said third fluid connection unit is realized as a single fluid connection from the fuel tank to the fuel pump of said integrating processing unit.

The first fluid connection of said first fluid connection unit may provide an air/water mixture from stack to said means for condensing water. The first integrating fluid connection may be realized through associated openings on opposite surfaces of said unit for condensing water and said unit for separating gas streams from liquid streams provided with a sealing element in between, wherein said first integrating fluid connection provides a cooled air/water mixture from said means for condensing water to said means for separating gas streams from liquid streams. The opening of said unit for condensing water may be a fluid inlet or a fluid outlet. The second fluid connection of said first fluid connection unit may provide a fuel/gas mixture from stack to said means for separating gas from a fuel. The means for separating gas from a fuel may be provided with a venting opening for releasing the separated gas to the ambient. The fourth fluid connection may provide fuel from tank into said means for separating gas from a fuel. The second integrating fluid connection may provide water from said means for separating air from water into said means for separating gas from a fuel. The gas separated by said means for separating a gas from fuel may be CO₂ and the fuel may be methanol. The means for separating a gas from a fuel and the means for separating air from water may be arranged in direct contact with each other, wherein said second integrating fluid connection is an opening in a diaphragm placed in the connecting wall between said means for separating a gas from a fuel and said means for separating air from water for feeding back condensed water into a fuel stream. The means for condensing water may be realized as a heat exchanger. The sealing element may be realized as a gasket, a glue line or a soldering material. The connecting elements may comprise first connection elements located on said means for condensing water and second connection elements provided on said unit for separating gas streams from liquid streams or first connection elements located on said unit for separating gas streams from liquid streams and second connection elements provided on said means for condensing water, wherein said first connection elements are designed to fit into said second connection elements. The connection elements and may be screws or bolts with related threads or ratchets or latches with associated indentations.

In another embodiment the fluid opening of the unit for condensing water may be in fluid contact to a multitude of heat exchanging elements provided within said unit for condensing water. The heat exchanging elements may be plates or tubes. The unit for separating gas streams from liquid streams may be realized as a single compartment. One or more pumps may be attached to said unit for separating gas streams from liquid streams having at least a fifth fluid connection to said one or more pumps, wherein said fifth fluid connection may be provided and sealed by a further sealing element. The one or more pumps may be circulation pumps for sucking a fuel mixture from the integrating processing unit through the fluid connection and pumping it to the outside or fuel pumps sucking concentrated fuel from an attached fuel tank and injecting it into said fluid connection in order to mix it with the fuel mixture inside said unit for separating gas streams from liquid streams.

In yet another embodiment the first integrating fluid connection may be a fluid guiding device connecting said means for condensing water and said unit for separating gas streams from liquid streams. The fluid guiding device may comprise a fluid connection for guiding a condensed stream consisting of water and air exiting from the opening of said means for condensing water to said opening of said unit for separating gas streams from liquid streams and for providing a mechanical connection between said means for condensing water and said unit for separating gas streams from liquid streams. A fan may be attached to a side of said means for condensing water through fixtures. The guiding device may be placed on top of said means for condensing water and said unit for separating gas streams from liquid streams. The fluid guiding device may be provided with a rectangular form.

The invention will be described in more detail through the following embodiments together with the accompanied drawings.
- Fig. 1:: is a schematic drawing of a fuel cell supply system employing a heat exchanging assembly according to the invention.
- Fig. 2:: is a schematic drawing of a modular direct fuel cell system according to the invention.
- Fig. 3:: is a schematic drawing of an integrating processing unit of Fig. 2 in a first embodiment.
- Fig. 4:: is a schematic drawing of an integrating processing unit of Fig. 2 in a second embodiment.
- Fig. 5:: is a schematic drawing of an integrating processing unit of Fig. 2 in a third embodiment.

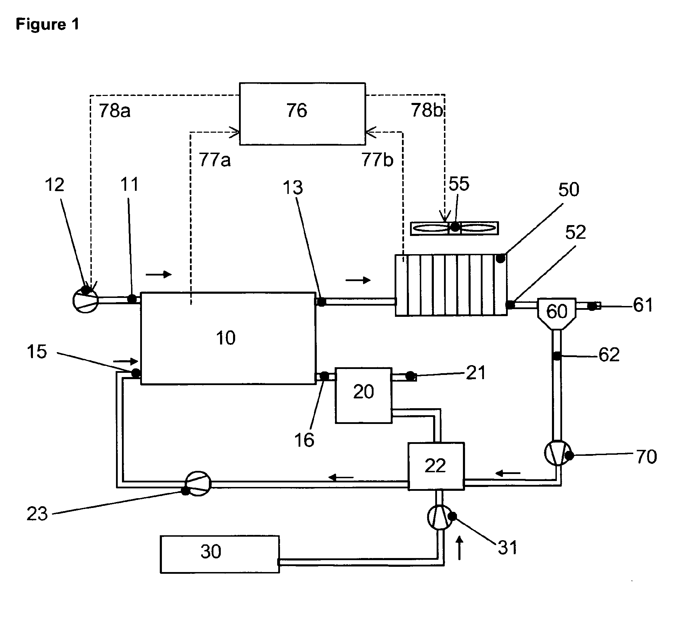

Fig. 1 shows a schematic drawing of a fuel cell supply system employing a heat exchanging assembly according to the invention. The fuel cell system is realized as a Direct Methanol Fuel Cell (DMFC) system. A fuel cell stack 10 has an air inlet 11 and an air outlet 13. The air pump or fan 12 supplies reaction air to the stack cathode through the air inlet 11. An anode cycle for diluted fuel consisting of a CO₂ separator 20 mounted downstream from the stack fuel outlet 16 removes CO₂ from the reaction stream and vents it to the ambient through a venting opening 21. In a mixer 22 the fuel stream is mixed with pure fuel from a fuel tank 30. A fuel pump 23 feeds the diluted fuel back to the fuel inlet 15 of the stack.

The heat exchanger 50 is mounted in the outlet stream of the fuel cell cathode. A ventilation unit 55, e.g. a fan, is used to cool the heat exchanger, leading to a cooling of the outlet stream and a condensation of water. This two phase flow exits the heat exchanger at the outlet 52. The ventilation unit 55 and the heat exchanger 50 form the heat exchanging assembly according to the invention. Downstream of the heat exchanger, a water separator 60 is mounted in order to separate liquid water from the air stream. The separated water is fed back to the anode cycle of the fuel cell system by a condensate pump 70, the residual air is vented through an outlet 61 to the ambient.

A control unit 76 for the system gets input signals 77a, 77b from different sensors, e.g. temperature, level, concentration sensors or others. Using the input signals the control unit 76 calculates output signals 78a, 78b for the active system components like the air pump 12, the fan 55 or others.

It is obvious from Fig. 1 that there is a large number of fluid connections necessary between the system components. This results in high costs during system assembly, requires a considerable part of the space within the housing and may cause quality problems due to interchanging of connections during assembly or loosening of connections during operation.

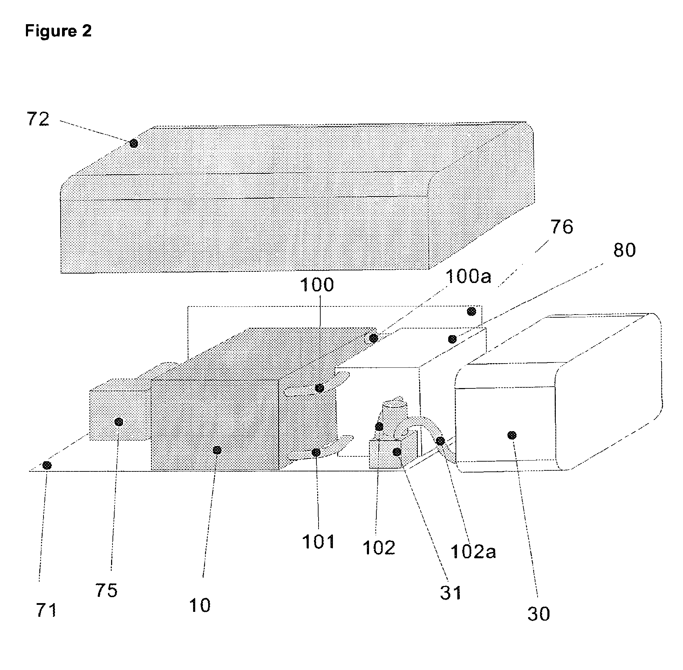

A schematic drawing of a modular direct fuel cell system according to the invention is shown in Fig. 2. The main components of the system shown are the housing comprising of a bottom 71 and a top 72, a fuel cell stack 10, the air pump 75, the system control 76, a fuel tank 30 and an Integrating Processing Unit 80. The Integrating Processing Unit 80 integrates at least the functions of condensing the water from the air outlet 13 of the stack, separating the water from the outlet air and feeding the water back into the anode cycle, separating the CO2 from the stack fuel outlet 16 and mixing concentrated fuel from the fuel tank 30 into the anode cycle.. Due to this the fuel cell system needs only a limited number of fluid connections since the majority of connections are realized internally of the Integrating Processing Unit 80 between its subunits. In the shown embodiment there are two connections 100 and 100a leading the outlet air and the outlet fuel from the stack 10 into the Integrating Processing Unit 80, and one fluid connection 101 leading the fuel mixture from the Integrating Processing Unit 80 back to the stack 10. In addition there is on fluid connection 102a, 102 leading concentrated fuel from the tank via the fuel pump 31 to the Integrating Processing Unit. Due to the limited number of fluid connections the system assembly is simple, saves costs and avoids quality problems related to the failure of fluid connections.

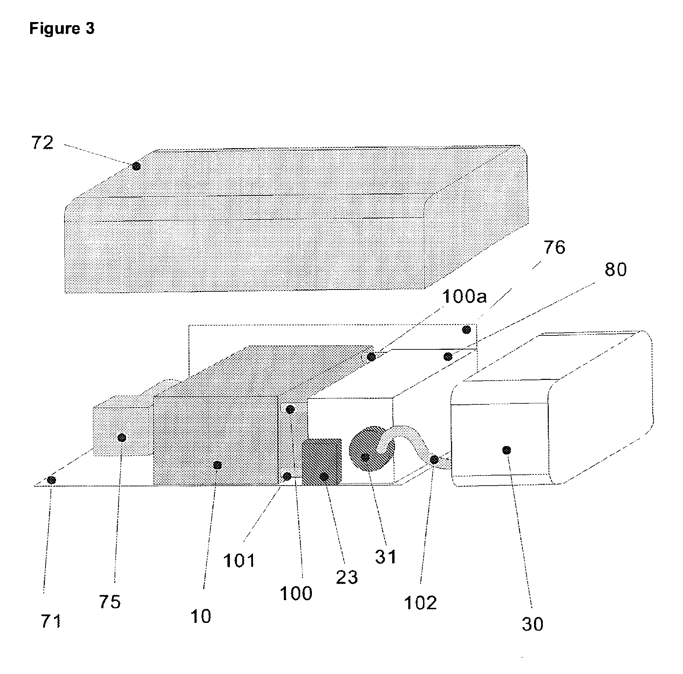

In Fig. 3 an alternative embodiment of the fuel cell system and the Integrating Processing Unit 80 is disclosed. Here, the fuel pump 31 and a circulation pump 23 are additionally integrated into the Integrating Processing Unit 80. This further reduces the number on fluid connections within the fuel cell system to two connections 100, 100a from the stack 10 to the Integrating Processing Unit 80, one connection 101 from the Integrating Processing Unit 80 to the stack and one connection 102 from the fuel tank 30 to the Integrating Processing Unit 80.

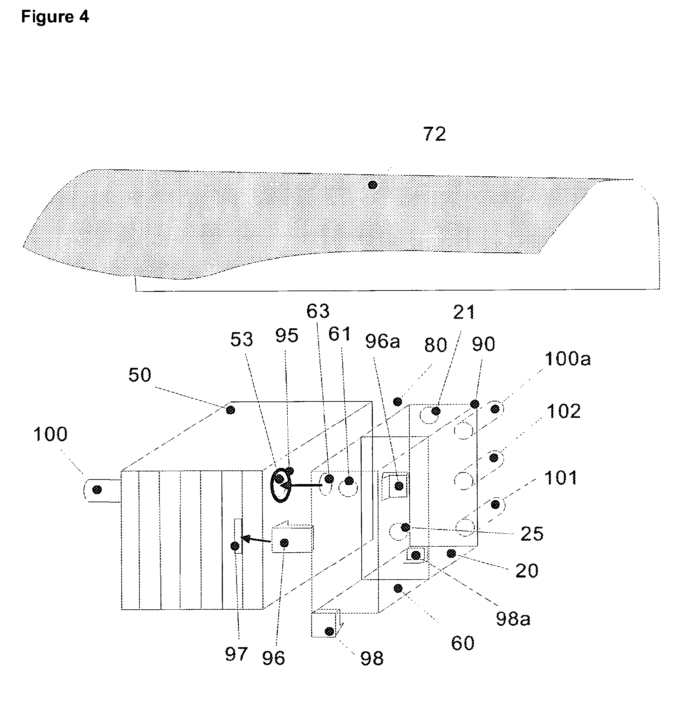

Fig. 4 is a schematic drawing of an Integrating Processing Unit of Fig. 2 in a first embodiment disclosing the main idea for the design of the Integrating Processing Unit 80. The Integrating Processing Unit 80 mounted inside the housing top 72 comprises of at least two subunits, the condenser or heat exchanger 50 and the gas/liquid separation subunit 90. The latter comprises of at least a CO2/fuel separation compartment 20 and an air/water separation compartment 60 having a fluid connection with each other, e.g. an opening 25 in the diaphragm. In this embodiment the CO2/fuel separation compartment 20 fulfils also the function of the mixer.

The air/water mixture from the stack air outlet 13 enters the heat exchanger 50 through the air connection 100. The mixture is cooled down in order to condense liquid water. This cooled mixture enters the air/water separation compartment 60 through a connection which is formed by the openings 53 and 63. In the compartment 60 liquid water is separated from air. The air is released to the ambient through the air venting outlet 61.

The fuel/CO2 mixture from the stack fuel outlet 16 enters the CO2/fuel separation compartment 20 through the connection 100a. In the compartment 20 the CO2 is separated from the fuel mixture and is released to the ambient through a venting opening 21. Concentrated fuel from the fuel tank 30 is fed into the compartment 20 through the fuel connection 102 a and the condensed and separated water from the air/water separation compartment 60 is fed in through the connection 25.

The fuel mixture regenerated in this way is fed back to the fuel cell stack through the connection 101.

The heat exchanger 50 has at least one fluid opening 53 which may be a fluid inlet or a fluid outlet at the surface adjacent to the gas/liquid separation subunit. The gas/liquid separation subunit has a dedicated fluid opening 63 at the opposing surface. A sealing element 95 being a gasket, a glue line, a soldering material or any other type of seal, is placed in between.

Connection elements for assembly 96, 96a are designed to fit into counterpart elements 97, 97a. The connection elements can be screws or bolts with related threads, ratchets or latches with associated indentations or the like.

Due to this geometrical arrangement the assembly of the two subunits 50 and 90 can be achieved in a way that the mechanical connection through the connection elements and the sealing of the fluid connection formed by the fluid openings 53 and 63 and the sealing element 95 is carried out in one step and without the need of additional tubes or hoses for the fluid connections.

According to the idea of the invention several fluid connection between the subunits of the Integrating Processing Unit can be closed by arranging the associated fluid opening on opposite surfaces of the subunits to be connected and by applying sealing elements in between during or before the process of assembly.

In a further detailing of the invention idea additional connection elements 98, 98a may be applied in order to connect the Integrating Processing Unit 80 to the bottom of the housing 71 or to any other component of the fuel cell system.

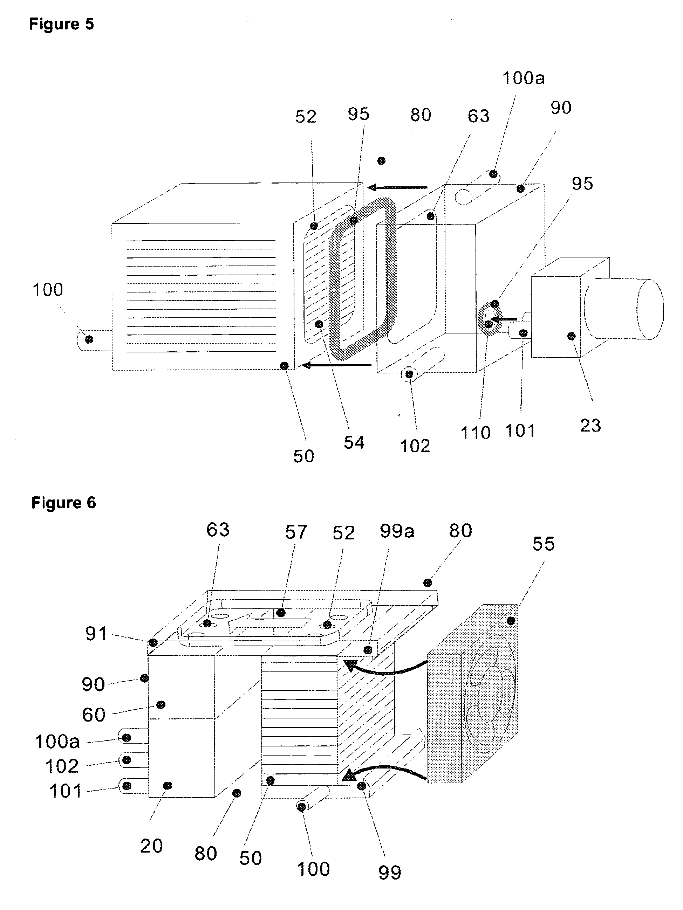

Fig. 5 is a schematic drawing of an integrating processing unit of Fig. 2 in a second embodiment. Here the heat exchanger outlet 52 is in fluid relation to a multitude of heat exchanging elements 54 which may be heat exchanging plates or tubes or the like. The heat exchanger outlet is directly connected to the fluid opening 63 of the gas/liquid separation subunit 90. During assembly a sealing element 95 is applied in between.

In this embodiment the gas/liquid separation subunit 90 is built up as a single compartment, i.e. the separation of air from water and the separation of CO2 from fuel is carried out in this single compartment. These processes directly lead to a mixing of condensed water and fuel and saves space for a diaphragm and fluid guidance means.

The advantage of this embodiment is the reduction of pressure drop within the fluid connection between heat exchanger outlet 52 and the inlet of the air/water separator 60, thus saving power for the air pumping.

As a further detail one or more pump(s) 23 may by directly attached to the Integrating Processing Unit 80 at a fluid connection 110. The connection 110 is sealed by another sealing element 95. This pump may be a circulation pump sucking fuel mixture from the separation subunit 80 through the fluid connection 110 and pumping it to the anode inlet of the stack 15. It may also be the fuel pump 31 sucking concentrated fuel from the fuel tank 30 and injecting it into the fluid connection 110 in order to mix it with the fuel mixture inside the gas/liquid separation subunit 80 or it may be both pumps 23 and 31.

A third alternative embodiment is shown in Fig. 6. The two main components of the Integrating Processing Unit 80, the heat exchanger 50 and the gas/liquid separation subunit are connected through a fluid guiding device 91. This device has two functions in one: the condensate stream consisting of water and air exiting from the heat exchanger outlet 52 is guided to the gas/liquid separation subunit inlet 63 via a fluid connection 57 which is formed within a hollow part of the fluid guiding device 91. The second function is a mechanical connection between the heat exchanger 50 and the gas/liquid separation subunit 90. Again both the fluid connection and the mechanical assembly is performed by attaching the fluid guiding device 91 to the heat exchanger and the gas/liquid separation subunit.

As an additional detail of this embodiment a fan 55 can be attached to the Integrating Processing Unit 80 through appropriate fixtures 99, 99a. This simplifies the assembly of the whole system.

According to the idea of the invention a combination of any layout of a gas/liquid separation subunit 90 with a simultaneous mechanical assembly and fluid connection with a heat exchanging/condensing unit is possible. In a further embodiment of the invention connection elements 98, 98a to the housing bottom of any other component of the system can be present. Further system components like pumps or fans may be attached to the Integrating Processing Unit 80 in order to simplify system layout and manufacturing.

### List of reference numbers

- 10: Fuel cell stack
- 11: Cathode inlet of stack
- 12: Air pump
- 13: Cathode outlet of stack
- 15: Anode (fuel) inlet of stack
- 16: Anode (fuel) outlet of stack
- 20: CO2/fuel separator
- 21: CO2 outlet
- 22: Mixer
- 23: Circulation pump
- 25: Fluid opening between gas/liquid separation compartments
- 30: Fuel tank
- 31: Fuel pump
- 50: Heat exchanger
- 52: Heat exchanger outlet
- 53: Fluid opening of heat exchanger
- 54: Heat exchanging elements
- 55: Fan
- 57: Fluid connection
- 60: Air/water separator
- 61: Air venting outlet
- 62: Water feedback connection
- 63: Fluid opening of gas/liquid separation part
- 70: Water feedback pump
- 71: Housing bottom
- 72: Housing top
- 75: Air or fuel pump
- 76: Control unit
- 77a, 77b: Sensor inputs to control unit
- 78a, 78b: Control outputs of control unit
- 80: Integrating processing unit
- 90: Gas/liquid separation subunit
- 91: Fluid guiding device
- 95: Sealing element
- 96, 96a: Connection elements between gas/liquid separation part and heat exchanger
- 97, 97a: Counterparts for connection elements
- 98, 98a: Connection elements between integrating processing unit and housing
- 99, 99a: Connection elements for fan
- 100, 100a: Fluid connections between stack and integrating processing unit (stack outlet streams)
- 101, 101 a: Fluid connection between integrating processing unit and stack (stack inlet stream)
- 102, 102a: Fluid connection between fuel tank and integrating processing unit (fuel lines)

## Claims

1. A modular DMFC fuel cell system, comprising a housing (72) having a bottom (71) and a top (72), a pump (75), a fuel cell stack (10), a system control (76), and a fuel tank (30) integrated into said housing (72), the system comprising
- an integrating processing unit (80) provided in said housing (72), which integrates a unit for condensing water (50), and a unit for separating gas streams from liquid streams (90),
- a first fluid connection unit (100, 100a) between said fuel cell stack (10) and said integrating processing unit (80) for leading outlet air and outlet fuel from stack (10) into the integrating processing unit (80),
- a second fluid connection unit (101) between said fuel cell stack (10) and said integrating processing unit (80) for leading a fuel mixture from the integrating processing unit (80) back to stack (10), and
- a third fluid connection unit (102, 102a) leading fuel from the tank (30) to the integrating processing unit (80),
**characterized in that**
said means for separating gas streams from liquid streams (90) comprises means for separating a gas from a fuel (20) and means for separating air from water (60) having a second integrating fluid connection (25) between each other.

2. A system according to claim 1, **characterized in that** said integrating processing unit (80) further comprises,
- means for mechanically connecting (96, 96a, 97, 97a) said unit for condensing water (50) and said unit for separating gas streams from liquid streams (90), and
- a first integrating fluid connection (52, 53, 63) between said unit for condensing water (50) and said unit for separating gas streams from liquid streams (90), wherein said first integrating fluid connection is closed and sealed off by mechanically connecting said unit for condensing water (50) and said unit for separating gas streams from liquid streams (90) using said means for connecting (96, 96a, 97, 97a),

3. System according to claim 1, **characterized in that** said pump (75), fuel cell stack (10), integrating processing unit (80) and said fuel tank (30) are arranged horizontally next to each other on said bottom (71) of said housing.

4. System according to one of the previous claims, **characterized in that** said system control (76) is arranged behind said line on said bottom (71) of said housing, the system control (76) receiving input signal (77a, 77b) from sensors in the integrating processing unit (80) and/or the stack (10) and calculates output signals (78a, 78b) for controlling the system.

5. System according to at least one of the previous claims, **characterized in that** fuel cell stack (10) and said fuel tank (30) are arranged on opposing sides of said integrating processing unit (80).

6. System according to claim 1, **characterized in that** said first fluid connection unit (100, 100a) is realized as a first fluid connection (100) and a second fluid connection (100a) being separated from each other.

7. System according to claim 1, **characterized in that** said third fluid connection unit (102, 102a) is realized as a third fluid connection (102) and a fourth fluid connection (102a) leading fuel from the tank (30) via a fuel pump (31) to the integrating processing unit (80).

8. System according to at least one of the previous claims, **characterized in that** a fuel pump (31) and/or a circulation pump (23) are further integrating into the integrating processing unit (80), wherein said third fluid connection unit is realized as a single fluid connection from the fuel tank (30) to the fuel pump (31) of said integrating processing unit (80).

9. System according to at least one of the previous claims, **characterized in that** said first fluid connection (100) of said first fluid connection unit (100, 100a) provides an air/water mixture from stack (10) to said means for condensing water (50).

10. System according to at least one of the previous claims, **characterized in that** said first integrating fluid connection is realized through associated openings (53, 63) on opposite surfaces of said unit for condensing water (50) and said unit for separating gas streams from liquid streams (90) provided with a sealing element (95) in between, wherein said first integrating fluid connection provides a cooled air/water mixture from said means for condensing water (50) to said means for separating gas streams from liquid streams (90).

11. System according to claim 10, **characterized in that** said opening (53) of said unit for condensing water (50) is a fluid inlet or a fluid outlet.

12. System according to at least one of the previous claims, **characterized in that** said second fluid connection (100a) of said first fluid connection unit (100, 100a) provides a fuel/gas mixture from stack (10) to said means for separating gas from a fuel (20).

13. System according to at least one of the previous claims, **characterized in that** said means for separating gas from a fuel (20) is provided with a venting opening (21) for releasing the separated gas to the ambient.

14. System according to at least one of the previous claims, **characterized in that** said fourth fluid connection (102a) provides fuel from tank (30) into said means for separating gas from a fuel (20).

15. System according to at least one of the previous claims, **characterized in that** said second integrating fluid connection (25) provides water from said means for separating air from water (60) into said means for separating gas from a fuel (20).

16. System according to at least one of the previous claims, **characterized in that** the gas separated by said means for separating a gas from fuel is CO₂ and said fuel is methanol.

17. System according to at least one of the previous claims, **characterized in that** said means for separating a gas from a fuel (20) and said means for separating air from water (60) are arranged in direct contact with each other, wherein said second integrating fluid connection (25) is an opening in a diaphragm placed in the connecting wall between said means for separating a gas from a fuel (20) and said means for separating air from water (60) for feeding back condensed water into a fuel stream.

18. System according to at least one of the previous claims, **characterized in that** said means for condensing water (50) is realized as a heat exchanger.

19. System according to at least one of the previous claims, **characterized in that** said sealing element (95) is realized as a gasket, a glue line or a soldering material.

20. System according to at least one of claim 2, **characterized in that** said connecting elements comprise first connection elements (96, 96a) located on said means for condensing water (50) and second connection elements (97, 97a) provided on said unit for separating gas streams from liquid streams (90) or first connection elements (96, 96a) located on said unit for separating gas streams from liquid streams (90) and second connection elements (97, 97a) provided on said means for condensing water (50), wherein said first connection elements (96, 96a) are designed to fit into said second connection elements (97, 97a).

21. System according to at least one of the previous claims, **characterized in that** said connection elements (96, 96a) and (97, 97a) are screws or bolts with related threads or ratchets or latches with associated indentations.

22. System according to at least one of the previous claims, **characterized in that** a fluid opening (52) of said unit for condensing water (50) is in fluid contact to a multitude of heat exchanging elements (54) provided within said unit for condensing water (50).

23. System according to at least one of the previous claims, **characterized in that** said heat exchanging elements (54) are plates or tubes.

24. System according to at least one of the previous claims, **characterized in that** said unit for separating gas streams from liquid streams (90) is realized as a single compartment.

25. System according to at least one of the previous claims, **characterized in that** one or more pumps (23) are attached to said unit for separating gas streams from liquid streams (90) having at least a fifth fluid connection (110) to said one or more pumps (23), wherein said fifth fluid connection (110) is provided and sealed by a further sealing element (95).

26. System according to at least one of the previous claims, **characterized in that** said one or more pumps (23) are circulation pumps for sucking a fuel mixture from the integrating processing unit (80) through the fluid connection (110) and pumping it to the outside or fuel pumps (31) sucking concentrated fuel from an attached fuel tank (30) and injecting it into said fluid connection (110) in order to mix it with the fuel mixture inside said unit for separating gas streams from liquid streams (90).

27. System according to at least one of the previous claims, **characterized in that** said first integrating fluid connection is a fluid guiding device (91) connecting said means for condensing water (50) and said unit for separating gas streams from liquid streams (90).

28. System according to at least one of the previous claims, **characterized in that** said fluid guiding device (91) comprises fluid connection (57) for guiding a condensed stream consisting of water and air exiting from the opening (52) of said means for condensing water (50) to said opening (63) of said unit for separating gas streams from liquid streams (90) and for providing a mechanical connection between said means for condensing water (50) and said unit for separating gas streams from liquid streams (90).

29. System according to at least one of the previous claims, **characterized in that** a fan (55) is attached to a side of said means for condensing water (50) through fixtures (99, 99a).

30. System according to at least one of the previous claims, **characterized in that** said guiding device (91) is placed on top of said means for condensing water (50) and said unit for separating gas streams from liquid streams (90).

31. System according to at least one of the previous claims, **characterized in that** said fluid guiding device (91) is provided with a rectangular form.

## Patentansprüche

1. Ein modulares DMFC-Brennstoffzellensystem, umfassend ein Gehäuse (72) mit einer Unterseite (71) und einer Oberseite (72), eine Pumpe (75), einen Brennstoffzellenstapel (10), eine Systemsteuerung (76) sowie einen Brennstofftank (30), der in besagtes Gehäuse (72) integriert ist, wobei das System folgendes umfasst:
- eine in besagtem Gehäuse (72) bereitgestellte integrierende Verarbeitungseinheit (80), die eine Einheit zum Kondensieren von Wasser (50) sowie eine Einheit zum Trennen von Gasströmen von Flüssigkeitsströmen (90) integriert,
- eine erste Fluidverbindungseinheit (100, 100a) zwischen besagtem Brennstoffzellenstapel (10) und besagter integrierender Verarbeitungseinheit (80) zum Führen von Auslassluft und Auslassbrennstoff von Stapel (10) in die integrierende Verarbeitungseinheit (80),
- eine zweite Fluidverbindungseinheit (101) zwischen besagtem Brennstoffzellenstapel (10) und besagter integrierender Verarbeitungseinheit (80) zum Führen einer Brennstoffmischung von der integrierenden Verarbeitungseinheit (80) zurück zu Stapel (10) und
- eine dritte Fluidverbindungseinheit (102, 102a), die Brennstoff von dem Tank (30) zu der integrierenden Verarbeitungseinheit (80) führt,
**dadurch gekennzeichnet, dass**
besagtes Mittel zum Trennen von Gasströmen von Flüssigkeitsströmen (90) Mittel zum Trennen eines Gases von einem Brennstoff (20) sowie Mittel zum Trennen von Luft von Wasser (60) mit einer zweiten integrierenden Fluidverbindung (25) zwischeneinander umfasst.

2. Ein System nach Anspruch 1, **dadurch gekennzeichnet, dass** besagte integrierende Verarbeitungseinheit (80) ferner folgendes umfasst:
- Mittel zum mechanischen Verbinden (96, 96a, 97, 97a) besagter Einheit zum Kondensieren von Wasser (50) und besagter Einheit zum Trennen von Gasströmen von Flüssigkeitsströmen (90) und
- eine erste integrierende Fluidverbindung (52, 53, 63) zwischen besagter Einheit zum Kondensieren von Wasser (50) und besagter Einheit zum Trennen von Gasströmen von Flüssigkeitsströmen (90), wobei besagte erste integrierende Fluidverbindung durch mechanisches Verbinden besagter Einheit zum Kondensieren von Wasser (50) und besagter Einheit zum Trennen von Gasströmen von Flüssigkeitsströmen (90) unter Verwendung besagter Mittel zum Verbinden (96, 96a, 97, 97a) geschlossen und versiegelt ist.

3. System nach Anspruch 1, **dadurch gekennzeichnet, dass** besagte Pumpe (75), Brennstoffzellenstapel (10), integrierende Verarbeitungseinheit (80) sowie besagter Brennstofftank (30) auf besagter Unterseite (71) besagten Gehäuses horizontal nebeneinander angeordnet sind.

4. System nach einem der vorangehenden Ansprüche, **dadurch gekennzeichnet, dass** besagte Systemsteuerung (76) hinter besagter Linie auf besagter Unterseite (71) besagten Gehäuses angeordnet ist, wobei die Systemsteuerung (76) Eingabesignal (77a, 77b) von Sensoren in der integrierenden Verarbeitungseinheit (80) und/oder dem Stapel (10) empfängt und Ausgabesignale (78a, 78b) zum Steuern des Systems berechnet.

5. System nach mindestens einem der vorangehenden Ansprüche, **dadurch gekennzeichnet, dass** Brennstoffzellenstapel (10) und besagter Brennstofftank (30) auf gegenüberliegenden Seiten besagter integrierender Verarbeitungseinheit (80) angeordnet sind.

6. System nach Anspruch 1, **dadurch gekennzeichnet, dass** besagte erste Fluidverbindungseinheit (100, 100a) als eine erste Fluidverbindung (100) und eine zweite Fluidverbindung (100a), die voneinander getrennt sind, ausgeführt ist.

7. System nach Anspruch 1, **dadurch gekennzeichnet, dass** besagte dritte Fluidverbindungseinheit (102, 102a) als eine dritte Fluidverbindung (102) und eine vierte Fluidverbindung (102a), die Brennstoff von dem Tank (30) über eine Brennstoffpumpe (31) zu der integrierenden Verarbeitungseinheit (80) führen, ausgeführt ist.

8. System nach mindestens einem der vorangehenden Ansprüche, **dadurch gekennzeichnet, dass** sich ferner eine Brennstoffpumpe (31) und/oder eine Umwälzpumpe (23) in die integrierende Verarbeitungseinheit (80) integrieren, wobei besagte dritte Fluidverbindungseinheit als eine einzige Fluidverbindung von dem Brennstofftank (30) zu der Brennstoffpumpe (31) besagter integrierender Verarbeitungseinheit (80) ausgeführt ist.

9. System nach mindestens einem der vorangehenden Ansprüche, **dadurch gekennzeichnet, dass** besagte erste Fluidverbindung (100) besagter erster Fluidverbindungseinheit (100, 100a) eine Luft-/Wasser-Mischung von Stapel (10) zu besagtem Mittel zum Kondensieren von Wasser (50) liefert.

10. System nach mindestens einem der vorangehenden Ansprüche, **dadurch gekennzeichnet, dass** besagte erste integrierende Fluidverbindung durch zugehörige Öffnungen (53, 63) auf gegenüberliegenden Oberflächen besagter Einheit zum Kondensieren von Wasser (50) und besagter Einheit zum Trennen von Gasströmen von Flüssigkeitsströmen (90), die mit einem Abdichtelement (95) dazwischen versehen sind, ausgeführt ist, wobei besagte erste integrierende Fluidverbindung eine gekühlte Luft-/Wasser-Mischung von besagtem Mittel zum Kondensieren von Wasser (50) zu besagtem Mittel zum Trennen von Gasströmen von Flüssigkeitsströmen (90) liefert.

11. System nach Anspruch 10, **dadurch gekennzeichnet, dass** besagte Öffnung (53) besagter Einheit zum Kondensieren von Wasser (50) ein Fluideinlass oder ein Fluidauslass ist.

12. System nach mindestens einem der vorangehenden Ansprüche, **dadurch gekennzeichnet, dass** besagte zweite Fluidverbindung (100) besagter erster Fluidverbindungseinheit (100, 100a) eine Brennstoff-/Wasser-Mischung von Stapel (10) zu besagtem Mittel zum Trennen von Gas von einem Brennstoff (20) liefert.

13. System nach mindestens einem der vorangehenden Ansprüche, **dadurch gekennzeichnet, dass** besagtes Mittel zum Trennen von Gas von einem Brennstoff (20) mit einer Entlüftungsöffnung (21) zum Freisetzen des getrennten Gases an die Umgebung versehen ist.

14. System nach mindestens einem der vorangehenden Ansprüche, **dadurch gekennzeichnet, dass** besagte vierte Fluidverbindung (102a) Brennstoff von Tank (30) in besagtes Mittel zum Trennen von Gas von einem Brennstoff (20) liefert.

15. System nach mindestens einem der vorangehenden Ansprüche, **dadurch gekennzeichnet, dass** besagte zweite integrierende Fluidverbindung (25) Wasser von besagtem Mittel zum Trennen von Luft von Wasser (60) in besagtes Mittel zum Trennen von Gas von einem Brennstoff (20) liefert.

16. System nach mindestens einem der vorangehenden Ansprüche, **dadurch gekennzeichnet, dass** das von besagtem Mittel zum Trennen von einem Gas von Brennstoff getrennte Gas CO₂ ist und besagter Brennstoff Methanol ist.

17. System nach mindestens einem der vorangehenden Ansprüche, **dadurch gekennzeichnet, dass** besagtes Mittel zum Trennen eines Gases von einem Brennstoff (20) und besagtes Mittel zum Trennen von Luft von Wasser (60) in direktem Kontakt miteinander angeordnet sind, wobei besagte zweite integrierende Fluidverbindung (25) eine Öffnung in einer in der Verbindungswand zwischen besagtem Mittel zum Trennen eines Gases von einem Brennstoff (20) und besagtem Mittel zum Trennen von Luft von Wasser (60) platzierten Membran zur Rückfuhr von kondensiertem Wasser in einen Brennstoffstrom ist.

18. System nach mindestens einem der vorangehenden Ansprüche, **dadurch gekennzeichnet, dass** besagtes Mittel zum Kondensieren von Wasser (50) als Wärmetauscher ausgeführt ist.

19. System nach mindestens einem der vorangehenden Ansprüche, **dadurch gekennzeichnet, dass** besagtes Abdichtelement (95) als Dichtung, Klebstofflinie oder Lötmaterial ausgeführt ist.

20. System nach mindestens einem von Anspruch 2, **dadurch gekennzeichnet, dass** besagte Verbindungselemente auf besagtem Mittel zum Kondensieren von Wasser (50) angeordnete erste Verbindungselemente (96, 96a) und auf besagter Einheit zum Trennen von Gasströmen von Flüssigkeitsströmen (90) bereitgestellte zweite Verbindungselemente (97, 97a) oder auf besagter Einheit zum Trennen von Gasströmen von Flüssigkeitsströmen (90) angeordnete erste Verbindungselemente (96, 96a) und auf besagtem Mittel zum Kondensieren von Wasser (50) bereitgestellte zweite Verbindungselemente (97, 97a) umfassen, wobei besagte erste Verbindungselemente (96, 96a) dazu ausgelegt sind, in besagte zweite Verbindungselemente (97, 97a) zu passen.

21. System nach mindestens einem der vorangehenden Ansprüche, **dadurch gekennzeichnet, dass** besagte Verbindungselemente (96, 96a) und (97, 97a) Schrauben oder Bolzen mit zugehörigen Gewinden oder Sperrklinken oder Schaltklinken mit zugehörigen Vertiefungen sind.

22. System nach mindestens einem der vorangehenden Ansprüche, **dadurch gekennzeichnet, dass** eine Fluidöffnung (52) besagter Einheit zum Kondensieren von Wasser (50) in Fluidkontakt mit einer Mehrzahl von innerhalb besagter Einheit zum Kondensieren von Wasser (50) bereitgestellten Wärmetauschelementen (54) steht.

23. System nach mindestens einem der vorangehenden Ansprüche, **dadurch gekennzeichnet, dass** besagte Wärmetauschelemente (54) Platten oder Röhren sind.

24. System nach mindestens einem der vorangehenden Ansprüche, **dadurch gekennzeichnet, dass** besagte Einheit zum Trennen von Gasströmen von Flüssigkeitsströmen (90) als einzelnes Fach ausgeführt ist.

25. System nach mindestens einem der vorangehenden Ansprüche, **dadurch gekennzeichnet, dass** eine oder mehrere Pumpen (23) an besagter Einheit zum Trennen von Gasströmen von Flüssigkeitsströmen (90) befestigt sind, mit mindestens einer fünften Fluidverbindung (110) zu besagten einen oder mehreren Pumpen (23), wobei besagte fünfte Fluidverbindung (110) von einem weiteren Abdichtelement (95) bereitgestellt und versiegelt ist.

26. System nach mindestens einem der vorangehenden Ansprüche, **dadurch gekennzeichnet, dass** besagte eine oder mehrere Pumpen (23) Umwälzpumpen zum Saugen einer Brennstoffmischung von der integrierenden Verarbeitungseinheit (80) durch die Fluidverbindung (110) und Pumpen derselben nach außen oder Brennstoffpumpen (31), die konzentrierten Brennstoff von einem angeschlossenen Brennstofftank (30) saugen und denselben in besagte Fluidverbindung (110) injizieren, um ihn mit der Brennstoffmischung innerhalb besagter Einheit zum Trennen von Gasströmen von Flüssigkeitsströmen (90) zu mischen, sind.

27. System nach mindestens einem der vorangehenden Ansprüche, **dadurch gekennzeichnet, dass** besagte erste integrierende Fluidverbindung eine Fluidleitvorrichtung (91) ist, die besagtes Mittel zum Kondensieren von Wasser (50) und besagte Einheit zum Trennen von Gasströmen von Flüssigkeitsströmen (90) verbindet.

28. System nach mindestens einem der vorangehenden Ansprüche, **dadurch gekennzeichnet, dass** besagte Fluidleitvorrichtung (91) Fluidverbindung (57) zum Leiten eines kondensierten Stroms, der aus Wasser und Luft besteht, die von der Öffnung (52) besagten Mittels zum Kondensieren von Wasser (50) austreten, zu besagter Öffnung (63) besagter Einheit zum Trennen von Gasströmen von Flussigkeitsströmen (90) und zum Bereitstellen einer mechanischen Verbindung zwischen besagtem Mittel zum Kondensieren von Wasser (50) und besagter Einheit zum Trennen von Gasströmen von Flüssigkeitsströmen (90) umfasst.

29. System nach mindestens einem der vorangehenden Ansprüche, **dadurch gekennzeichnet, dass** ein Lüfter (55) durch Halterungen (99, 99a) an einer Seite besagten Mittels zum Kondensieren von Wasser (50) befestigt ist.

30. System nach mindestens einem der vorangehenden Ansprüche, **dadurch gekennzeichnet, dass** besagte Fluidleitvorrichtung (91) oben auf besagtem Mittel zum Kondensieren von Wasser (50) und besagter Einheit zum Trennen von Gasströmen von Flüssigkeitsströmen (90) platziert ist.

31. System nach mindestens einem der vorangehenden Ansprüche, **dadurch gekennzeichnet, dass** besagte Fluidleitvorrichtung (91) mit einer rechteckigen Form versehen ist.

## Revendications

1. Système de pile à combustible modulaire DMFC, comprenant un boîtier (72) ayant une partie inférieure (71) et une partie supérieure (72), une pompe (75), un empilement de piles à combustible (10), une commande de système (76) et un réservoir de combustible (30) intégrés dans ledit boîtier (72), le système comprenant
- une unité de traitement d'intégration (80) prévue dans ledit boîtier (72), qui intègre une unité destinée à condenser de l'eau (50) et une unité destinée à séparer les flux de gaz des flux de liquides (90),
- une première unité de connexion de fluide (100, 100a) entre ledit empilement de piles à combustible (10) et ladite unité de traitement d'intégration (80) destinée à conduire l'air de sortie et le combustible de sortie depuis l'empilement (10) jusque dans l'unité de traitement d'intégration (80),
- une deuxième unité de connexion de fluide (101) entre ledit empilement de piles à combustible (10) et ladite unité de traitement d'intégration (80) destinée à conduire un mélange de combustible provenant de l'unité de traitement d'intégration (80) en retour vers l'empilement (10), et
- une troisième unité de connexion de fluide (102, 102a) conduisant le combustible du réservoir (30) jusqu'à l'unité de traitement d'intégration (80),
**caractérisé en ce que**
ledit moyen destiné à séparer les flux de gaz des flux de liquides (90) comprend un moyen destiné à séparer un gaz d'un combustible (20) et un moyen destiné à séparer l'air de l'eau (60) comportant une deuxième connexion de fluide d'intégration (25) entre l'un et l'autre.

2. Système selon la revendication 1, **caractérisé en ce que** ladite unité de traitement d'intégration (80) comprend en outre
- un moyen destiné à connecter mécaniquement (96, 96a, 97, 97a) ladite unité destinée à condenser l'eau (50) et ladite unité destinée à séparer les flux de gaz des flux de liquides (90), et
- une première connexion de fluide d'intégration (52, 53, 63) entre ladite unité destinée à condenser l'eau (50) et ladite unité destinée à séparer les flux de gaz des flux de liquides (90), où ladite première connexion de fluide d'intégration est fermée et scellée en connectant mécaniquement ladite unité destinée à condenser l'eau (50) et ladite unité destinée à séparer les flux de gaz des flux de liquides (90) en utilisant ledit moyen de connexion (96, 96a, 97, 97a).

3. Système selon la revendication 1, **caractérisé en ce que** ladite pompe (75), l'empilement de piles à combustible (10), l'unité de traitement d'intégration (80) et ledit réservoir de combustible (30) sont disposés horizontalement côte à côte sur ladite partie inférieure (71) dudit boîtier.

4. Système selon l'une des revendications précédentes, **caractérisé en ce que** ladite commande de système (76) est agencée derrière ladite ligne sur ladite partie inférieure (71) dudit boîtier, la commande du système (76) recevant des signaux d'entrée (77a, 77b) de capteurs dans l'unité de traitement d'intégration (80) et/ou l'empilement (10) et calcule des signaux de sortie (78a, 78b) pour commander le système.

5. Système selon au moins l'une des revendications précédentes, **caractérisé en ce que** l'empilement de piles à combustible (10) et ledit réservoir de combustible (30) sont agencés sur des côtés opposés de ladite unité de traitement d'intégration (80).

6. Système selon la revendication 1, **caractérisé en ce que** ladite première unité de connexion de fluide (100, 100a) est réalisée sous la forme d'une première connexion de fluide (100) et d'une deuxième connexion de fluide (100a) qui sont séparées l'une de l'autre.

7. Système selon la revendication 1, **caractérisé en ce que** ladite troisième unité de connexion de fluide (102, 102a) est réalisée sous la forme d'une troisième connexion de fluide (102) et d'une quatrième connexion de fluide (102a) conduisant le combustible depuis le réservoir (30) par l'intermédiaire d'une pompe à combustible (31) jusqu'à l'unité de traitement d'intégration (80).

8. Système selon au moins l'une des revendications précédentes, **caractérisé en ce qu'**une pompe à combustible (31) et/ou une pompe de circulation (23) sont en outre intégrées dans l'unité de traitement d'intégration (80), où ladite troisième unité de connexion de fluide est réalisée sous la forme d'une connexion de fluide unique du réservoir de combustible (30) à la pompe à combustible (31) de ladite unité de traitement d'intégration (80).

9. Système selon au moins l'une des revendications précédentes, **caractérisé en ce que** ladite première connexion de fluide (100) de ladite première unité de connexion de fluide (100, 100a) fournit un mélange air/eau depuis l'empilement (10) audit moyen destiné à condenser l'eau (50).

10. Système selon au moins l'une des revendications précédentes, **caractérisé en ce que** ladite première connexion de fluide d'intégration est réalisée par le biais d'ouvertures associées (53, 63) sur des surfaces opposées de ladite unité destinée à condenser de l'eau (50) et de ladite unité destinée à séparer les flux de gaz des flux de liquides (90) munies d'un élément d'étanchéité (95) entre elles, où ladite première connexion de fluide d'intégration fournit un mélange air/eau refroidi dudit moyen destiné à condenser l'eau (50) audit moyen destiné à séparer les flux de gaz des flux de liquides (90).

11. Système selon la revendication 10, **caractérisé en ce que** ladite ouverture (53) de ladite unité destinée à condenser l'eau (50) est un orifice d'entrée de fluide ou un orifice de sortie de fluide.

12. Système selon au moins l'une des revendications précédentes, **caractérisé en ce que** ladite deuxième connexion de fluide (100a) de ladite première unité de connexion de fluide (100, 100a) fournit un mélange combustible/gaz de l'empilement (10) audit moyen destiné à séparer le gaz d'un combustible (20).

13. Système selon au moins l'une des revendications précédentes, dans lequel ledit moyen destiné à séparer le gaz d'un combustible (20) est muni d'une ouverture de mise à l'évent (21) destinée à relâcher le gaz séparé à l'atmosphère ambiante.

14. Système selon au moins l'une des revendications précédentes, **caractérisé en ce que** ladite quatrième connexion de fluide (102a) fournit du combustible depuis le réservoir (30) jusque dans ledit moyen destiné à séparer le gaz d'un combustible (20).

15. Système selon au moins l'une des revendications précédentes, **caractérisé en ce que** ladite deuxième connexion de fluide d'intégration (25) fournit de l'eau dudit moyen destiné à séparer l'air de l'eau (60) dans ledit moyen destiné à séparer le gaz d'un combustible (20).

16. Système selon au moins l'une des revendications précédentes, **caractérisé en ce que** le gaz séparé par ledit moyen destiné à séparer un gaz du combustible est du CO₂, et ledit combustible est du méthanol.

17. Système selon au moins l'une des revendications précédentes, **caractérisé en ce que** ledit moyen destiné à séparer un gaz d'un combustible (20) et ledit moyen destiné à séparer l'air de l'eau (60) sont agencés en contact direct l'un avec l'autre, où ladite deuxième connexion de fluide d'intégration (25) est une ouverture dans une membrane placée dans la paroi de liaison entre ledit moyen destiné à séparer un gaz d'un combustible (20) et ledit moyen destiné à séparer l'air de l'eau (60) destinée à fournir en retour l'eau condensée dans un flux de combustible.

18. Système selon au moins l'une des revendications précédentes, **caractérisé en ce que** ledit moyen destiné à condenser l'eau (50) est réalisé sous la forme d'un échangeur de chaleur.

19. Système selon au moins l'une des revendications précédentes, **caractérisé en ce que** ledit élément d'étanchéité (95) est réalisé sous la forme d'un joint d'étanchéité, d'une ligne de colle ou d'un matériau de soudure.

20. Système selon au moins la revendication 2, **caractérisé en ce que** lesdits éléments de connexion comprennent des premiers éléments de connexion (96, 96a) situés sur ledit moyen destiné à condenser l'eau (50) et des deuxièmes éléments de connexion (97, 97a) disposés sur ladite unité destinée à séparer les flux de gaz des flux de liquides (90) ou bien des premiers éléments de connexion (96, 96a) situés sur ladite unité destinée à séparer les flux de gaz des flux de liquides (90) et des deuxièmes éléments de connexion (97, 97a) disposés sur ledit moyen destiné à condenser l'eau (50), où lesdits premiers éléments de connexion (96, 96a) sont conçus pour tenir dans lesdits deuxièmes éléments de connexion (97, 97a).

21. Système selon au moins l'une des revendications précédentes, **caractérisé en ce que** lesdits éléments de connexion (96, 96a) et (97, 97a) sont des vis ou des boulons comportant des filets ou des cliquets ou des loquets ayant des indentations associées.

22. Système selon au moins l'une des revendications précédentes, **caractérisé en ce qu'**une ouverture de fluide (52) de ladite unité destinée à condenser l'eau (50) est en contact de fluide avec une multitude d'éléments d'échange de chaleur (54) prévus à l'intérieur de ladite unité destinée à condenser l'eau (50).

23. Système selon au moins l'une des revendications précédentes, **caractérisé en ce que** lesdits éléments d'échange de chaleur (54) sont des plaques ou des tubes.

24. Système selon au moins l'une des revendications précédentes, **caractérisé en ce que** ladite unité destinée à séparer les flux de gaz des flux de liquides (90) est réalisée sous la forme d'un seul compartiment.

25. Système selon au moins l'une des revendications précédentes, **caractérisé en ce qu'**une ou plusieurs pompes (23) sont rattachées à ladite unité destinée à séparer les flux de gaz des flux de liquides (90) comportant au moins une cinquième connexion de fluide (110) vers lesdites une ou plusieurs pompes (23), où ladite cinquième connexion de fluide (110) est munie d'un autre élément d'étanchéité (95) et scellée par celui-ci.

26. Système selon au moins l'une des revendications précédentes, **caractérisé en ce que** lesdites une ou plusieurs pompes (23) sont des pompes de circulation destinées à aspirer un mélange de combustible à partir de l'unité de traitement d'intégration (80) par le biais de la connexion de fluide (110) et à le pomper vers l'extérieur ou des pompes à combustible (31) aspirant le combustible concentré à partir d'un réservoir de combustible rattaché (30) et à l'injecter dans ladite connexion de fluide (110) afin de le mélanger avec le mélange de combustible à l'intérieur de ladite unité destinée à séparer les flux de gaz des flux de liquides (90).

27. Système selon au moins l'une des revendications précédentes, **caractérisé en ce que** ladite première connexion de fluide d'intégration est un dispositif de guidage de fluide (91) reliant ledit moyen destiné à condenser de l'eau (50) et ladite unité destinée à séparer les flux de gaz des flux de liquides (90).

28. Système selon au moins l'une des revendications précédentes, **caractérisé en ce que** ledit dispositif de guidage de fluide (91) comprend une connexion de fluide (57) destinée à guider un flux condensé constitué d'eau et d'air sortant de l'ouverture (52) dudit moyen destiné à condenser de l'eau (50) vers ladite ouverture (63) de ladite unité destinée à séparer les flux de gaz des flux de liquides (90) et destinée à fournir une connexion mécanique entre ledit moyen destiné à condenser de l'eau (50) et ladite unité destinée à séparer les flux de gaz des flux de liquides (90).

29. Système selon au moins l'une des revendications précédentes, **caractérisé en ce qu'**un ventilateur (55) est fixé à un côté dudit moyen destiné à condenser l'eau (50) par le biais d'éléments de fixation (99, 99a).

30. Système selon au moins l'une des revendications précédentes, **caractérisé en ce que** ledit dispositif de guidage (91) est placé sur la partie supérieure dudit moyen destiné à condenser l'eau (50) et de ladite unité destinée à séparer les flux de gaz des flux de liquides (90).

31. Système selon au moins l'une des revendications précédentes, **caractérisé en ce que** ledit dispositif de guidage de fluide (91) est doté d'une forme rectangulaire.
